# EUROPEAN PATENT APPLICATION

(11) **EP 1 501 240 A2**
(43) Date of publication of application: **26.01.2005**
(21) Application number: 04012493.5
(22) Date of filing: 26.05.2004
(51) Int. Cl.: H04L 12/24, H04L 29/06

(54) **Network connection agents and troubleshooters**

(30) Priority: 30.06.2003 US 615624
(71) Applicant: MICROSOFT CORPORATION, Redmond, Washington 98052-6399 (US)
(72) Inventor: Chu, Ya-Bing, Bellevue, Washington 98005 (US); Morais, Dinarte A., Redmond, Washington 98052 (US); Pogrebinsky, Nataly, Issaquah, Washington 98028 (US)
(74) Representative: Grünecker, Kinkeldey, Stockmair & Schwanhäusser Anwaltssozietät

(57) **Abstract**

Subject matter includes a network connection agent and troubleshooter that automatically connects a device to a network service in multiple stages, displays real-time status reports of connection progress with respect to each stage, and displays troubleshooting help and instructions with respect to a stage if the stage is not successful.

## Description

### TECHNICAL FIELD

This subject matter disclosed herein relates generally to network connectivity and more specifically to network connection agents and troubleshooters.

### BACKGROUND

As more and more home and office electronic devices (e.g., smart devices, entertainment electronics, etc.) join the ranks of consumer products that can couple to and communicate over a network, a need has arisen for protocols and methods to establish correct network connections and settings.

The task of connecting to a network can daunt the skilled and overwhelm the uninitiated. User manuals and installation programs that include directions for connecting a device, such as a modem, game, etc., to the Internet disseminate cryptic and poorly translated instructions fraught with programming code segments and written for a technician with a knowledge of the device commensurate with the manufacturer's.

Known software, e.g., MOTIVE XI SMARTSERVICE SUITE, can automate a pre-installation interaction between a broadband provider and a customer, but this is generally for provisioning cable and digital subscriber line (DSL) networks at the broadband multi-system operator (MSO) level. (Motive Communications, Austin, Texas.)

A successful connection to the Internet or an online service on the first try often results from good luck rather than from an understanding of and an adherence to installation instructions. Unsuccessful attempts at connection are met with unhelpful recorded messages at the customer service number. An unsuccessful user may not be able to obtain relevant help, as it may not be clear whether a problem exists on the network or closer to home as when a mandatory cable, driver, or wireless component is missing from an installation kit.

### SUMMARY

Subject matter includes a network connection agent and troubleshooter that automatically connects a device to a network service in multiple stages, displays real-time status reports of connection progress with respect to each stage, and displays troubleshooting help and instructions with respect to a stage if the stage is not successful. The network connection agent and troubleshooter may use multiple techniques for each stage, and if one technique is unsuccessful, another technique is automatically attempted. Manual entry of network settings can be selected during automatic connection.

In one implementation, a network connection agent and troubleshooter verifies communicative coupling between a device and a network, detects IP settings using DHCP or PPPoE, performs a DNS name resolution, and confirms settings by communicating with the network service being connect to.

### BRIEF DESCRIPTION OF THE DRAWINGS

Fig. 1 is a block diagram of an exemplary computing environment in which the subject matter may be practiced.
Fig. 2 is a block diagram of an exemplary network connection-and-troubleshooting engine.
Fig. 3 is a flow diagram of an exemplary method of connecting a device to a network or network service.
Fig. 4 is a flow diagram of another exemplary method of connecting a device to a network or network service.
Fig. 5 is a graphic representation of exemplary user interfaces of an exemplary network connection agent and troubleshooter.
Fig. 6 is a graphic representation of an exemplary network status screen user interface.
Fig. 7 is a graphic representation of an exemplary help and troubleshooting screen user interface of an exemplary NCAT.
Fig. 8 is a block diagram of an exemplary computing device suitable for use with the subject matter.

### DETAILED DESCRIPTION

### Overview

The subject matter presented herein includes an exemplary network connection agent and troubleshooter (hereinafter "NCAT") that communicatively couples an electronic device to a network and/or online network service ("service") and troubleshoots connection failures, particularly initial attempts to plug-in and/or connect with the Internet or a service. An NCAT not only makes the various stages of a network connection set-up process more automatic, but offers smart messaging for updating a user-in real-time-of the status of each stage in a connection attempt and offers context-sensitive troubleshooting help. Thus, for a user, an exemplary NCAT improves the experience of installing a device as the user can see an automatic connection process in real-time, how much of the process is left to complete, the stage of the process at which an error occurs, and context-sensitive troubleshooting help if needed. From the standpoint of a vendor of a device (or an online service), an NCAT may make an online service or a consumer electronic device, such as a modem, game console, set top box, personal media recorder, personal computer, personal digital assistant, wireless router, etc., that connects to the Internet, more user-friendly, since the online service or the device can "connect itself" to a network and/or service and is thus more attractive to consumers.

Usually, an NCAT is able to connect a device to a network and/or network service more automatically and effortlessly (for the user) than conventional methods, and in most circumstances a user does not have to actively participate in making a connection as the NCAT automatically progresses from verifying communicative couplings, such as rudimentary communicative couplings, and then establishes connectivity on higher layers of TCP/IP or other network protocols.

When trouble arises during a connection attempt to a network or service, an NCAT includes a toolbox of workarounds, so that the trouble is often overcome and a network connection is still established in many circumstances.

When establishment of a network connection is unsuccessful, an NCAT includes another toolbox of context-sensitive troubleshooting instructions and error logs.

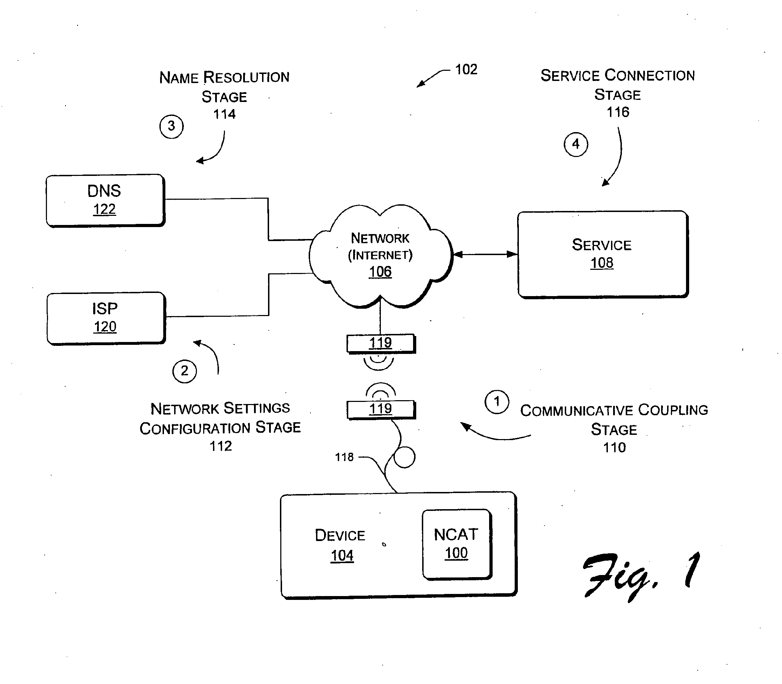

**Fig. 1** shows an exemplary NCAT 100 in the context of a computing environment 102. An NCAT 100 communicatively couples a device 104 and a network 106, over which a service 108 may be available. The NCAT 100 then tries to automatically establish all connections and communications needed for the device 104 to communicate properly with the network 106 and/or service 108.

In one implementation, an NCAT 100 is a separate software and/or hardware entity that may be used with a variety of devices 104 to be connected. In another implementation, such as that illustrated, an NCAT 100 is a software and/or hardware entity that can be integrated into the design of a device 104, such as a modem, a game console for online games, a set top box, a personal media recorder, a personal computer, a portable computer, a personal digital assistant, a wireless router, etc., that connects to a network 106, such as the Internet. In one implementation, when installed as an integrated or at least "included" part of a design for a given type of device 104, each device 104 of that type, for example each game console, can boot to an NCAT 100 thus providing a common way to handle connection failures, even if the connection failures happen for different reasons.

At each step in a connection process, if an NCAT 100 fails at one connection technique it may try additional techniques. For example, when automatic detection of network settings by an NCAT 100 is not successful an NCAT 100 may try another protocol and/or offer context-sensitive help to assist a user in fixing the problem without tech support. The help may be offered on several levels, for example, user-friendly help and more detailed and technical information for technicians and support engineers. Overall, the measure of comprehensive help that can be offered by an NCAT 100 can decrease the number of support calls to a service 108 targeted for connection and/or to a user's Internet Service Provider (ISP). If a support call is needed, it may be shorter because an NCAT 100 returns extended information that can be relayed to support personnel.

In one implementation, as illustrated in Fig. 1, an NCAT 100 divides the task of communicatively coupling a device 104 to a network 106 and/or a service 108 into four stages: a communicative coupling stage 110, a network settings configuration stage 112, a name resolution stage 114 (e.g., via a domain name system (DNS)), and a service connection stage 116, wherein the device 104 establishes communication with a service 108 that may be associated with the device 104 (i.e., if the device 104 is a game console, the service 108 may be an online gaming site). However, other ways of dividing the task of establishing a successful communicative connection can be used.

The communicative coupling stage 110 involves establishing physical communication means with a network 106, for example, via a cable 118, and/or a wireless coupling 119, such as an infrared coupling and/or a wireless communication coupling adhering to the Institute of Electronics Engineers (IEEE) specifications 802.11, 802.11a, 802.11b, 802.11g, BLUETOOTH®, HOMERF shared wireless access protocol (SWAP), Wi-Fi, etc. In other words, an NCAT 100 tries to determine if a user has connected equipment properly and established a communicative coupling with a network 106. If a cable 118 and/or wireless coupling 119 for access to a network 106 is unplugged or becomes inoperative, the connection process stops and the user is informed that a cable 118 and/or wireless coupling 119 is unplugged or defective. If a proper connection for the cable 118 and/or wireless coupling 119 is detected or re-established (i.e. the user plugs it in), the overall connection and troubleshooting process resumes.

Once the communicative coupling stage 110 between a device 104 and an access point to a target network 106 has been successfully detected by an NCAT 100, the NCAT 100. enters the network settings configuration stage 112. An NCAT 100 attempts contact with a user's ISP 120, for example, an NCAT 100 could try to establish IP setting via either dynamic host configuration protocol (DHCP) or via point to point protocol over Ethernet (PPPoE) that is generally provided with a digital subscriber line: DSL. In one implementation, if an IP address is obtained using DHCP, then the network settings configuration stage 112 is successful and an NCAT 100 can progress to the third connection stage. It should be noted that the user can also enter manual settings, such as a static IP address, and an NCAT 100 will automatically retrieve information from a domain name service (DNS) to minimize data entry. If a user tries to manually set an IP address, but a DHCP server is not found, an NCAT 100 may stop the network settings configuration stage 112 and inform the user that an IP address was not found, and offer help in the form of detailed information about possible causes of failure, such as an IP conflict or loose cables.

In one implementation, if no IP address is obtained, and the user has not entered a static IP address, an NCAT 100 continues the network settings configuration stage 112 by attempting to detect PPPoE concentrators. If these are discovered, the NCAT 100 tries to connect using PPPoE. Thus, an NCAT 100 tries to automatically detect the presence of a PPPoE server if the DHCP protocol fails to obtain an IP address for the device 104. (If a computer using MICROSOFT WINDOWS® XP does not obtain an IP address from a DHCP server, the computing device automatically assigns an internal address of the form (169.xxx.xxx.xxx), but this internal address assigned by WINDOWS® XP does not allow the user to connect to the Internet, nor is there an attempt to find other methods to connect the device.) (Microsoft Corporation, Redmond, WA)

If the automatic attempt at completing a network settings configuration stage 112 using PPPoE fails, the NCAT 100 may ask the user to enter correct PPPoE credentials, such as a correct username and password for gaining entry, and/or to enter other information provided by the user's ISP 120. In one implementation, once a user supplies credentials, an NCAT 100 may try to connect again automatically, in case the user has entered incorrect information.

If the network settings configuration stage 112 is successful, an NCAT 100 progresses to the name resolution stage 114. Failure of the name resolution stage 114 may indicate a problem either with settings of the device 104 being connected or with the user's ISP 120. During exchange with a DNS 122, if a valid DNS server is found, then an NCAT 100 may progress to the service connection stage 116.

In the service connection stage 116, an NCAT ,100 tries to connect to a desired service 108, for example, to an online gaming service if the device 104 being connected and/or set-up is a game console. Including an exemplary service connection stage 116 in an overall connection process provides confirmation of network settings obtained in previous stages of a connection process.

In some implementations, an NCAT 100 performs an analysis of a quality of service (QoS) promised by a service 108 or required and/or suggested for a device 104. If an NCAT 100 fails to connect to a service 108 or, if in some implementations QoS data is invalid or insufficient, the NCAT 100 may inform the user that the service 108 is not responding.

In some implementations, an automatic QoS check and/or a network state debug log provide extended information to the user, tech support, and even a development team for a device 104. This information is recorded at the time of the connection attempt, and may be provided to tech support or a development team with respect to a connection status displayed on the screen to the user. QoS information captured for debugging may provide, for example, the bandwidth, the latency, the presence of a universal plug and play (UPnP) router, etc., during a connection attempt and/or failure, as well as the stage and/or state of the network connection at the time of failure.

In one implementation, in response to a connection failure, the serial number of the device 104 is displayed to the user and/or stored for support personnel to check if there is a problem with the device 104.

### Exemplary NCAT Engine

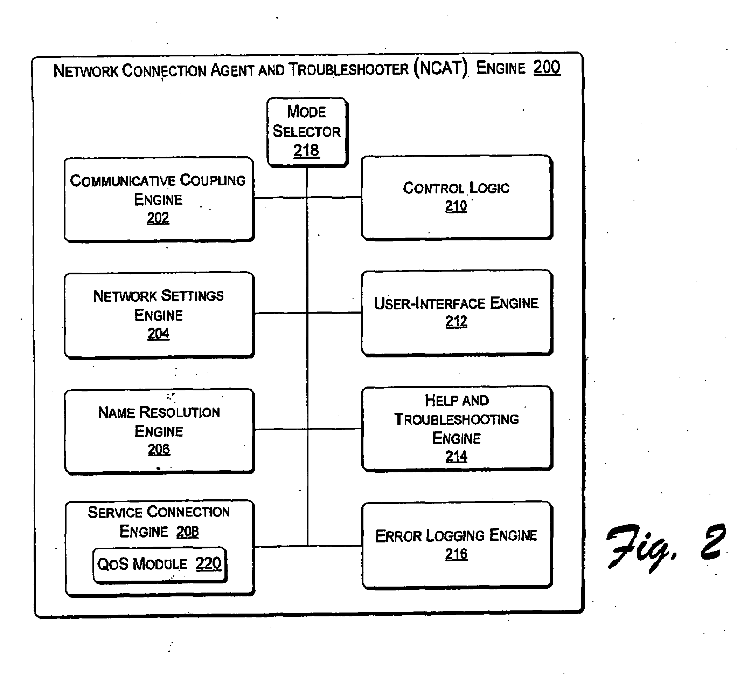

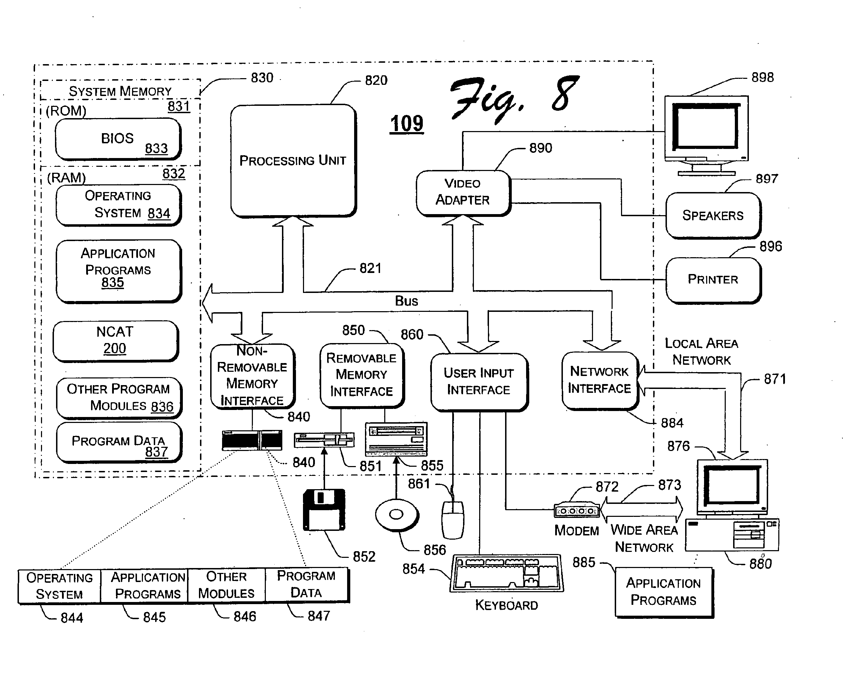

**Fig. 2** shows an exemplary network connection-and-troubleshooting engine "NCAT engine" 200, including components to perform the exemplary connection stages 110, 112, 114, 116. Accordingly, a communicative coupling engine 202, a network settings engine 204, a name resolution engine 206, and a service connection engine 208 are communicatively coupled with each other and with control logic 210 as illustrated. A user-interface engine 212, a help & troubleshooting engine 214, and an error logging engine 216 are also coupled with the other engines and the control logic 210 as illustrated. A mode selector 218 may also be included to switch between automatic setting detection and manual entry of network settings. In some implementations, the service connection engine 208 may have an associated QoS module 220. An exemplary device 104, such as a personal computer 109, suitable as an environment for practicing an exemplary NCAT engine 200 is shown in Fig. 8.

The communicative coupling engine 202, as mentioned, may check the connection status of a cable 118, such as an Ethernet cable, or the status of a wireless coupling 119. In one implementation this may be accomplished by detecting a data packet flow through a cable 118, but in an alternative implementation a communicative coupling engine 202 may be determined by other means, such as measuring a voltage, current, and/or capacitance, however small, associated with the cable 118; by sending out an electrical signal that elicits a response that can be measured to indicate a connected or unconnected cable 118; or by detecting a signal in a wireless coupling 119. A measurable electrical signal is present in many network setups if a piece of equipment is properly connected via a cable or wireless coupling to a hub. Of course, the hub may not be connected to a functioning network, but at this stage (110), a communicative coupling engine 202 is usually only concerned with a local communicative coupling. The communicative coupling engine 202 informs the user-interface engine 212 and the help and troubleshooting engine 214 to display either a success or failure message for the user along with a context-sensitive description of the success or failure and if needed, troubleshooting directions.

In one implementation the network settings engine 204 aims to establish a working IP address, gateway, subnet mask, etc., for the device 104 and/or connection, or at least obtain preliminary settings. Where the IP address and/or settings are stored is dependent on the type of device 104. Thus, the network settings engine 204, sometimes in conjunction with the name resolution engine 206, tries to obtain the local network topology, and settings for connecting with the network 106.

Depending on the network 106 or Internet configuration in use, an NCAT engine 200 may try to detect the presence of DHCP, but if that does not work, then an NCAT engine 200 may send packets as a "discovery" broadcast to attempt detection of other exemplary protocols that may be in use, such as PPPoE. In one implementation, if a PPPoE concentrator and/or server is detected, the name resolution engine 206 may begin the next stage in the connection process. The network settings engine 204 also informs the user-interface engine 212 and the help and troubleshooting engine 214 to display either a success or failure message for the user along with a context-sensitive description of the success or failure and if needed, troubleshooting directions. In one implementation, an NCAT 100 tries to detect a home router that supports universal plug and play (UPnP) and opens a correct port if one is detected.

In one implementation, the name resolution engine 206 queries a DNS server for name resolution. Already in possession of an IP address, an NCAT 100 may need popular names and URL's to look up other machines on the Internet. For example, if the device 104 is a game console, an NCAT 100 may need the name of an online game website and/or live servers associated with the vendor of the device 104.

A name resolution engine 206 can perform name resolution in two parts. First, a DNS server address needs to be obtained. Second, the DNS server needs to be looked up, i.e., a connection made for the name resolution. If the name resolution engine 206 does not successfully perform either of these two parts, then the name resolution stage 114 is deemed to be a connection failure.

The name resolution engine 206 as well as the network settings engine 204, in conjunction with the mode selector 218, may allow a user to enter settings and other information manually. For example, the user may enter a static IP address s and/or associated domain name manually. In one implementation, an NCAT engine 200 usually assumes the user input is correct without verification.

If the DNS name resolution is successful, the name resolution engine 206 sends a domain name and/or other settings and IP addresses to the service connection engine 208 for the next stage in the connection process. The name resolution engine 206 also informs the user-interface engine 212 and the troubleshooting help engine 214 to display either a success or failure message for the user along with a context-sensitive description of the success or failure and if needed, troubleshooting directions.

The service connection engine 208 makes an actual connection and/or communication with a service 108. Theoretically, once an NCAT 100 has verified a communicative coupling (such as a physical network connection), obtained proper IP settings, and possesses a domain name for a service 108, the ability to connect and communicate with a service 108 is a logical certainty. Oftentimes, however, unforeseen conditions warrant an actual communication with a service 108 before the goal of overall connection between a device 104 and a service 108 can be declared a success. The actual connection with a service 108 verifies that connection can be made with the proper handshake, that a part of the Internet is not down, and that the preceding connection steps have really returned correct settings.

If an exemplary NCAT engine 200 includes a QoS module 220, then verification of QoS parameters may also be performed before connection between a device 104 and a network 106 and/or service 108 is declared a success to the user. QoS statistics and/or parameters gathered and/or analyzed by an NCAT engine 200 include upload bandwidth, download bandwidth, number of data packets dropped or lost, latency, jitter, etc...and other QoS parameters known in the art of providing a guaranteed data transfer ability. In some implementations, an ongoing recordation of QoS information is made during the stages of a connection attempt. This allows the error logging engine 216 to supply a user or support personnel with QoS parameters at the time one of the connections stages failed. For example, if a connection attempt fails to contact a DNS server, perhaps a QoS parameter at the time of failure shows that the upload bandwidth was temporarily reduced to near zero and the packet loss rate was unusually high.

The QoS statistics and/or parameters gathered by a QoS module 220 of an NCAT engine 200 are used to accomplish a successful connection, but may also be sent to the user-interface engine 212 for ongoing display to a user. In some implementations, the QoS information is included in dashboard information of a device 104 while in alternative implementations the QoS information may be available only to technical personnel, or those who know an access method generally undocumented to most consumers, such as a service menu of the device 104.

In some implementations, the user-interface engine 212 provides messages that are considered status reports, such as "DHCP not available" or "IP not detected," while in other implementations the troubleshooting-help engine 214 may provide such messages as preludes for directions to be displayed for remedying the events reported in the messages. In still other alternative implementations, such messages are error messages, and therefore provided by the error logging engine 216.

The error logging engine 216 may trap, record; and return extended error codes and messages in addition to regular connection status and failure-to-connect messages and information. Examples of extended error information include values for QoS parameters at the time of a connection failure, the number of connection attempts and/or logon attempts during various stages of a connection attempt, uplink and downlink times, serial number of the device 104, etc. All these extended error messages and codes are useful to support personnel solving a problem that the user cannot.

In one implementation, an exemplary error logging engine 216 stores error events and a record of connection failures including the above-mentioned extended error information (such as a snapshot of the QoS environment during a failure). The failure record and related error information can be persisted, for example on a hard disk, and uploaded later when a connection with a service 108 is actually successful. In one implementation, a failure record and related error information are used for statistical treatment of the connection characteristics of a device 104 over multiple instances of connection failure. In one implementation, a failure record and/or related error information can be used to complete a cycle of a Bayesian engine, which can refine connection solutions for future users of a device 104 or for customer service and technology planning purposes.

In one implementation, a service 108 can obtain uploaded failure records and error information from many connection failure occurrences of a given type or model of device 104 use failure occurrence as a node for a probabilistic belief network (e.g., a Bayes network) employed as a decision-making tool. A Bayesian network thus constructed can provide intuitive inference for computing the probability distributions of a set of variables in the Bayes network given evidence of other related variables in the network. In a device 104 having multiple parts (steps, states, and/or modules), an exemplary Bayesian network can describe probabilistic relationships between the parts and/or the connection stages 110, 112, 114, 116 and make decisions about one or more parts and/or connection stages using probabilistic inferences about the behavior, state, and/or input from the other parts and/or connection stages. A Bayesian network thus constructed from connection failure information stored by one or more exemplary error logging engines 216 may be used to decide which factors are influencing connection failure with respect to a given type or model of device 104.

Of course, an NCAT engine 200 may have a different configuration than the exemplary NCAT engine 200 illustrated. The task of automatically initiating a connection between device 104 and a network 106 and/or network service 108 may be divided in many ways, and variations in the engines and modules of an NCAT engine 200 may reflect variations in the division of the connection task into different stages or segments.

### Exemplary Methods

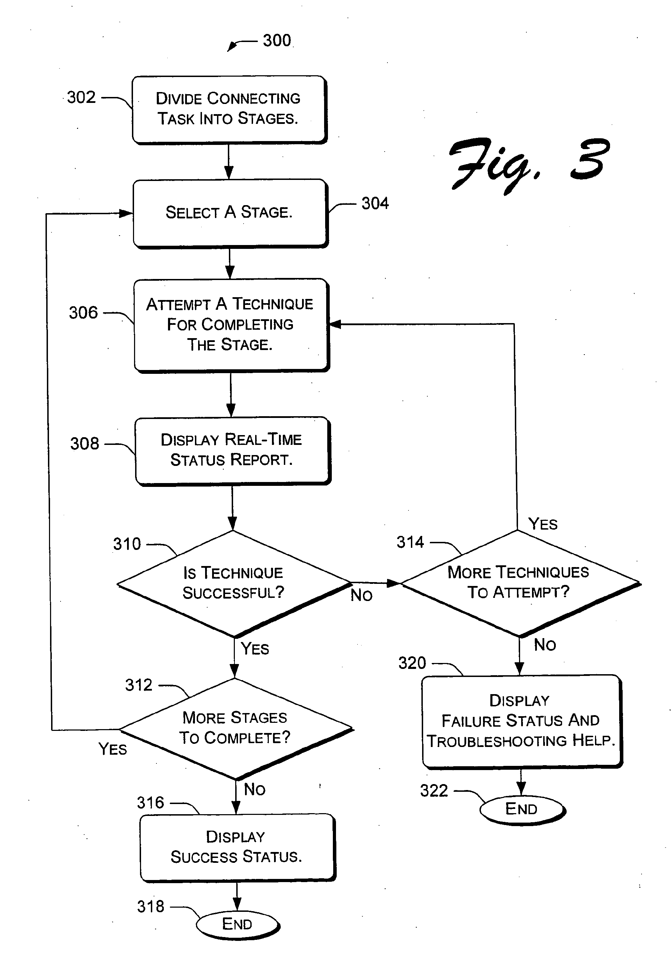

**Fig. 3** shows an exemplary method 300 of communicatively coupling a device 104 to a network 106 and/or network service 108. In the flow diagram, the operations are summarized in individual blocks. The operations of the exemplary method 300 may be performed in hardware and/or as machine-readable instructions (software or firmware) that can be executed by a processor or a device, such as a device that includes an exemplary NCAT engine 200.

At block 302, a task of connecting a device to a network and/or network service is divided into stages.

At block 304, one of the stages is selected. The selection usually proceeds in a logical order, e.g., a communicative coupling is completed before IP settings can be established, etc.

At block 306, a technique is attempted for completing the selected stage. The technique may be one of multiple techniques that will be attempted to complete the stage.

At block 308, a status report is displayed in real-time. The status report may be very specific, i.e., a progress indicator of percentage of the technique completed, or the status report may be more general, i.e., an indicator of whether the technique succeeded or failed. Yet again, the status report may just indicate whether the stage being attempted was completely successfully or unsuccessfully.

At block 310, if the technique for a stage is successful, then the exemplary method branches to block 312, but if the technique is not successful, then the exemplary method 300 branches to block 314.

At block 312, after a successful technique for completing a stage of connection, if there are more stages to complete, then the exemplary method 300 branches back to block 304 to select a subsequent stage of connection to attempt. If there are no more stages to complete then at block 316 a success status is displayed and at block 318 the exemplary method 300 ends.

At block 314, if there are more techniques to attempt for completing a stage of the connecting, then the exemplary method 300 branches to block 306 to attempt the next technique. If there are no more techniques to attempt, then at block 320 a failure status is displayed, troubleshooting help is presented, and at block 322 the exemplary method is suspended or ends.

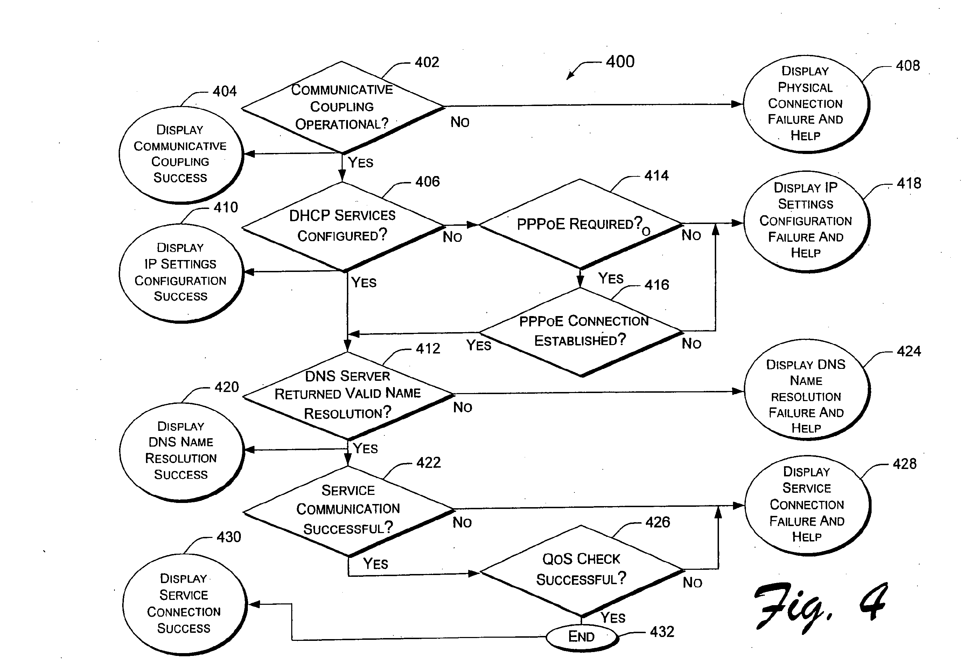

**Fig. 4** shows another exemplary method 400 of communicatively coupling a device 104 to a network 106 and/or network service 108. In the flow diagram, the operations are summarized in individual blocks. The operations of the exemplary method 400 may be performed in hardware and/or as machine-readable instructions (software or firmware) that can be executed by a processor or a device, such as a device that includes an exemplary NCAT engine 200.

At block 402, a status of a communicative coupling between a device 104 and a network 106 is determined, e.g., an NCAT 100 determines if an Ethernet cable is plugged in and/or operational. If the communicative coupling is operational, then the exemplary method branches to blocks 404 and 406. At block 404, a successful communicative coupling is displayed and/or indicated. If the communicative coupling is not operational, then the exemplary method 400 branches to block 408 where an unsuccessful communicative coupling is displayed or indicated along with help, which may include specific context-sensitive instructions for troubleshooting.

At block 406, the exemplary method 400 commences IP settings configuration. The exemplary method 400 determines if DHCP services are configured (or bootstrap protocol "BOOTP" if in use), i.e., the exemplary method 400 attempts to get an IP address "lease." If successful, the exemplary method 400 branches to blocks 410 and 412. At block 410, a successful IP settings configuration is displayed and/or indicated to a user. At block 412, the exemplary method 400 commences a next stage, DNS name resolution, as will be discussed below.

If at block 406, the DHCP services were not configured, then the exemplary method 400 branches to block 414, where the exemplary method 400 determines if PPPoE is required. If PPPoE services are required, then the exemplary method branches to block 416, where a PPPoE connection is attempted. If a PPPoE connection is successful, then at block 410 an IP settings configuration success is displayed or indicated and the exemplary method 400 proceeds to block 412. But at block 414, if PPPoE services were not required to configure IP settings (and at block 406 DHCP did not work either) then at block 418 the exemplary method 400 displays or indicates an IP setting configuration failure along with help, which may include specific context-sensitive instructions for troubleshooting.

At block 412, the exemplary method 400 proceeds to query DNS for an IP address, i.e., DNS name resolution. If an IP address is successfully obtained, the exemplary method branches to blocks 420 and 422. At block 420, a successful DNS name resolution is displayed and/or indicated. At block 422, the exemplary method 400 commences a next stage, connection with a service 108, as will be discussed below. If at block 412 the DNS name resolution is not successful, then at block 424 a DNS name resolution failure message is displayed or indicated.

At block 422, communication with a service 108 is attempted. If at block 422 the communication with a service 108 is successful, the exemplary method branches to block 426. If the attempted communication with the service 108 is unsuccessful, then the exemplary method branches to block 428, where a service connection failure message is displayed or indicated.

At block 426, the exemplary method 400 performs a QoS check. If the QoS check is successful, for example, meets minimum standards or selected values for guaranteed bandwidth, then the exemplary method branches to block 430 to display or indicate a service connection success message and to block 432 to suspend or end the exemplary method. If at block 426 the QoS check is not successful, even though communication with the service 108 may have been established at block 422, the exemplary method branches to block 428, where a service connection failure message is displayed or indicated.

The exemplary method 400 described above is just one example of how an NCAT 100 can perform a connection process between a device 104 and a network 106 and/or service 108. Other variations and additions are possible, for example, different protocols in different number and processed in a different sequence may be employed. Likewise, each part of the exemplary method 400 can be broken down into smaller or separate parts, for example, the process at block 426, checking QoS, could be a discreet stage having specific success and failure display consequences, instead of being combined with the service connection stage 116 at ; block 422 and its indicators of failure and success at blocks 426 and 430.

### Exemplary User Interfaces

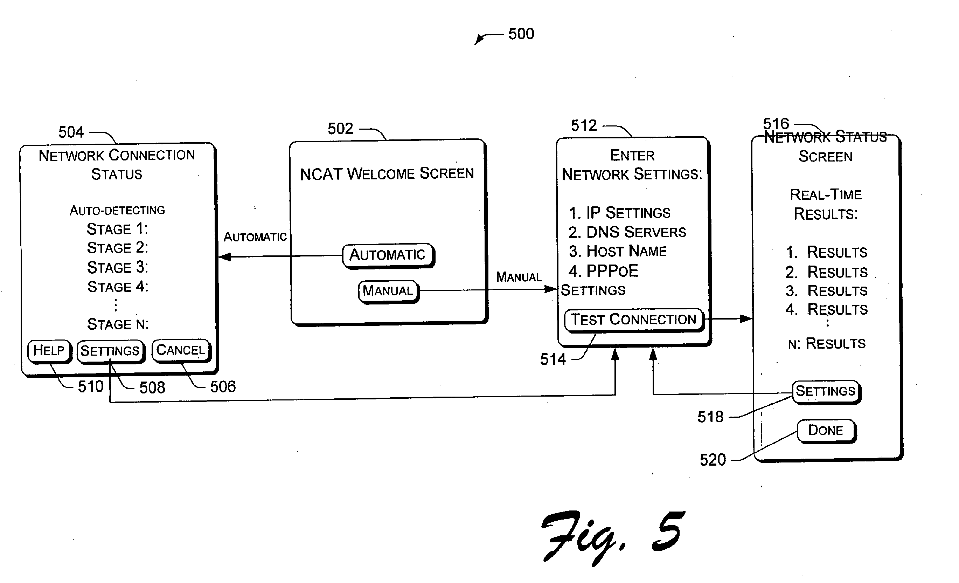

**Fig. 5** shows exemplary user interfaces (UIs) 500 for an implementation of an NCAT 100. A main screen 502 may display a welcome message and offer a choice between automatic detection and/or connection and manual entry of network settings. If automatic detection and/or connection is selected, then previous and/or default setting may be cleared and the main screen 502 links to a connection status screen 504 wherein real-time statuses of auto-connection and auto-detection during a network settings discovery process are displayed. In some implementations, navigation between screens is suspended during auto-connection and auto-detection. However, a cancel link 506 may be provided to stop the automatic process. A first settings link 508 may also be provided to allow a user the option to break into the automatic process and add manual settings, for example at a settings entry screen (512-to be discussed below). The first settings link 508 may also be highlighted by an exemplary NCAT 100 when information is required from a user, for example, when an NCAT 100 is requesting PPPoE credentials from the user. A help link 510 may be included to request help even though an NCAT 100 automatically returns context-sensitive help and troubleshooting directions when a stage of connection fails.

If a user selects manual entry of network settings, then the main screen 502 links to a network settings input screen 512, where a user can enter settings such as IP information, DNS servers, host name(s), and PPPoE settings, etc. The settings input screen 512 may also include a "test connection" link 514, to perform a trial run of the settings entered by the user.

The "test connection" link 514 may invoke a network status screen 516 that displays auto-connection attempts in real-time at each exemplary connection stage using the settings supplied by the user. If a failure occurs, then a second settings link 518 may link the user back to the settings entry screen 512. A "done" link 520 elicits a user's satisfaction with the settings entered and the status results displayed.

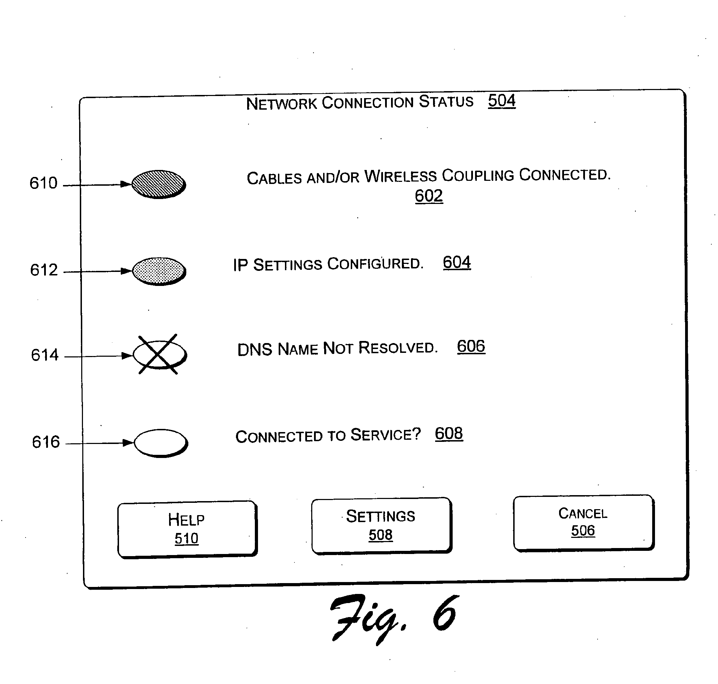

**Fig. 6** shows the exemplary network connection status screen 504 of Fig. 5 in greater detail. The connection status screen 504 displays a status message for each stage of a connection process. Although the illustrated connection status screen 504 indicates four stages in the connection process, a different number of stages could be used in a connection process giving rise to a corresponding number of status messages in a connection status screen 504.

Typically, a network connection status screen 504 displays a different message for a given stage depending on the status of the connection attempt for that stage. For example, a communicative coupling stage 110 might have real-time status messages that recite, "cables not connected," "cable connection underway," or "cables connected." The connection status of each stage of a connection process can be shown graphically at the same time as, or separately from, the display of the status messages.

In the illustrated example, a communicative coupling status message 602 is displayed to indicate the real-time status of a communicative coupling stage 110 and a corresponding graphic indicator 610, in this case an image of a light or button that is initially off or empty, is turned on or is filled in with a pattern or a solid color to indicate a successful completion of the stage. If no attempt at completing the stage has yet been made, then a graphic indicator (e.g., as in 610) may be left turned off or blank, and if a stage has failed, an indicator may show a failure signal, such as a large "X" placed over or through an empty graphic indicator (e.g., as in 614). Likewise, an IP settings configuration status message 604 is displayed to indicate a real-time status of a network settings configuration stage 112 and a corresponding graphic indicator 612 that is initially empty is filled in with a pattern or a solid color to indicate a successful completion of the stage. A DNS name resolution status message 606 is likewise displayed to indicate the real-time status of a name resolution stage 114. In the illustrated example, the attempt has failed, so a "DNS name not resolved" status message 606 is displayed and a corresponding graphic indicator 614 is crossed-out with a large "X." A service connection status message 608 is displayed to indicate the real-time status of a service connection stage 116 and in the illustrated example, since no attempt has been made to connect to the service, a corresponding graphic indicator 616 is left turned off or empty.

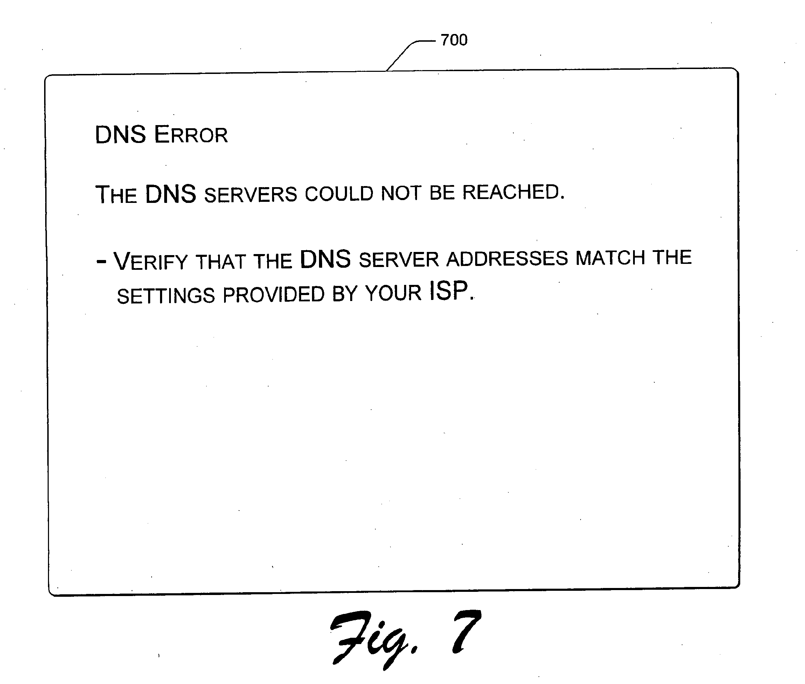

**Fig. 7** shows an exemplary help screen 700 automatically generated by an NCAT 100. An exemplary help screen 700 uses smart messaging. The information provided in an exemplary help screen 700 is context-sensitive and automatically generated in response to a real-time connection status. For example, if during a name resolution stage 114 the DNS servers cannot be reached, an exemplary help screen 700 might contain several pieces of information, such as a general status message 702, "DNS error," that informs the user of the stage in a connection process wherein the failure is occurring, and a more specific status message 704, "the DNS servers could not be reached," that informs the user of the specific opcration or technique within a stage of connecting that has failed. Such responsive real-time information is much more context-sensitive than conventional messages, such as "process aborted," "error A751," "connection failed," "operation could not be completed," or a spinning cursor that stops spinning.

An exemplary help screen 700 also provides context-sensitive troubleshooting help 706, such as "verify that the DNS server addresses match the settings provided by your ISP." While this example message recites troubleshooting help that most users would not want to receive (because a user may not have received any settings from their ISP), still, the troubleshooting help 706 is context-sensitive and has already narrowed troubleshooting down to a specific problem, that if addressed by a user, solves the failure or at least solves a first step in a solution to the failure. Thus, the contextual status reports and troubleshooting helps inform a user not only of a problem but also at what point in the network connecting process a failure has occurred.

### Exemplary Computing Device

**Fig. 8** shows an exemplary computer 109 suitable as an environment for practicing aspects of the subject matter. The components of computer 109 may include, but are not limited to, a processing unit 820, a system memory 830, and a system bus 821 that couples various system components including the system memory 830 to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISAA) bus, Video Electronics Standards Association (VESA) local bus, and Peripheral Component Interconnect (PCI) bus also known as the Mezzanine bus.

Exemplary computer 109 typically includes a variety of computer-readable media. Computer-readable media can be any available media that can be accessed by computer 109 and includes both volatile and nonvolatile media, removable and non-removable media. By way of example, and not limitation, computer-readable media may comprise computer storage media and communication media. Computer storage media include volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 109. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 109, such as during start-up, is typically stored in ROM 831. RAM 832 typically contains data and/or program modules that are immediately accessible to and/or presently being operated on by processing unit 820. By way of example, and not limitation, Fig. 8 illustrates operating system 834, application programs 835, other program modules 836, and program data 837. Although an exemplary NCAT 200 is depicted as software in random access memory 832, other implementations of an exemplary NCAT 200 can be hardware or combinations of software and hardware.

The exemplary computer 109 may also include other removable/non-removable, volatile/nonvolatile computer storage media. By way of example only, Fig. 8 illustrates a hard disk drive 841 that reads from or writes to non-removable, nonvolatile magnetic media, a magnetic disk drive 851 that reads from or writes to a removable; nonvolatile magnetic disk 852, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and magnetic disk drive 851 and optical disk drive 855 are typically connected to the system bus 821 by a removable memory interface such as interface 850.

The drives and their associated computer storage media discussed above and illustrated in Fig. 8 provide storage of computer-readable instructions, data structures, program modules, and other data for computer 109. In Fig. 8, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies. A user may enter commands and information into the exemplary computer 109 through input devices such as a keyboard 854 and pointing device 861, commonly referred to as a mouse, trackball, or touch pad. Other input devices (not shown) may include a microphone, joystick, game pad, satellite dish, scanner, or the like. These and other input devices are often connected to the processing unit 820 through a user input interface 860 that is coupled to the system bus, but may be connected by other interface and bus structures, such as a parallel port, game port, or a universal serial bus (USB). A monitor 898 or other type of display device is also connected to the system bus 821 via an interface, such as a video interface 890. In addition to the monitor 898, computers may also include other peripheral output devices such as speakers 897 and printer 896, which may be connected through an output peripheral interface 895.

The exemplary computer 109 may operate in a networked environment using logical connections to one or more remote computers, such as a remote computer 880. The remote computer 880 may be a personal computer, a server, a router, a network PC, a peer device or other common network node, and typically includes many or all of the elements described above relative to computer 109, although only a memory storage device 881 has been illustrated in Fig. 8. The logical connections depicted in Fig. 8 include a local area network (LAN) 871 and a wide area network (WAN) 873, but may also include other networks. Such networking environments are commonplace in offices, enterprise-wide computer networks, intranets, and the Internet.

When used in a LAN networking environment, the exemplary computer 109 is connected to the LAN 871 through a network interface or adapter 870. When used in a WAN networking environment, the exemplary computer 109 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the exemplary computer 109, or portions, thereof, may be stored in the remote memory storage device. By way of example, and not limitation, Fig. 8 illustrates remote application programs 885 as residing on memory device 881. It will be appreciated that the network connections shown are exemplary and other means of establishing a communications link between the computers may be used.

### CONCLUSION

The foregoing describes an exemplary network connection agent and troubleshooter (NCAT) and related methods for connecting a device to a network and/or network service. The subject matter described above can be implemented in hardware, in software, or in both hardware and software. In certain implementations, the exemplary NCAT and related methods may be described in the general context of computer-executable instructions, such as program modules, being executed by a computer. Generally, program modules include routines, programs, objects, components, data structures, etc. that perform particular tasks or implement particular abstract data types. The subject matter can also be practiced in distributed communications environments where tasks are performed over wireless communication by remote processing devices that are linked through a communications network. In a wireless network, program modules may be located in both local and remote communications device storage media including memory storage devices.

## Claims

1. A method, comprising:
connecting a device to a network service in a plurality of stages;
displaying in real-time, a status for each of the plurality of stages; and
if the status comprises an error status, further displaying in real-time, troubleshooting help.

2. The method as recited in claim 1, further comprising using a first technique to complete a stage of the plurality of stages and if the first technique fails, then automatically attempting one or more subsequent techniques to complete the stage.

3. The method as recited in claim 1, wherein connecting includes a communicative coupling stage between the device and a network.

4. The method as recited in claim 1, wherein connecting includes a network settings stage for configuring one of a network protocol and a network address.

5. The method as recited in claim 4, wherein the network settings stage exists as an Internet Protocol (IP) scttings stage and the network address exists as an IP address.

6. The method as recited in claim 5, wherein one or more techniques are attempted for completing the IP settings stage including one of a dynamic host configuration protocol (DHCP) technique, a point-to-point protocol over Ethernet (PPPoE) technique, and a bootstrap protocol (BOOTP) technique.

7. The method as recited in claim 4, wherein connecting includes a name resolution stage for associating the network address to a network domain name.

8. The method as recited in claim 7, wherein the name resolution stage exists as a domain name system (DNS) name resolution stage.

9. The method as recited in claim 1, wherein connecting includes a service connection stage for confirming communication with the network service..

10. The method as recited in claim 1, wherein the connecting proceeds between each of the multiple stages automatically.

11. The method as recited in claim 1, wherein the real-time status includes a message describing one of the plurality of stages.

12. The method as recited in claim 11, wherein the message describes progress of a technique used to complete one of the plurality of stages.

13. The method as recited in claim 1, wherein the real-time status includes a visual indicator of progress of one of the plurality of stages.

14. The method as recited in claim 1, wherein the real-time status includes a visual indicator of success or failure of one of the plurality of stages.

15. The method as recited in claim 1, wherein the troubleshooting help includes instructions for completing one of the plurality of stages.

16. The method as recited in claim 1, wherein the troubleshooting help includes instructions for completing a technique used to complete one of the plurality of stages.

17. The method as recited in claim 1, wherein the troubleshooting help includes a serial number of the device.

18. The method as recited in claim 1, wherein the troubleshooting help includes an error log compiled during the connecting.

19. The method as recited in claim 1, wherein the troubleshooting help includes a stage during the connecting at which a failure occurred.

20. The method as recited in claim 1, wherein the connecting includes a quality of service testing stage.

21. The method as recited in claim 20, wherein the troubleshooting includes quality of service information.

22. The method as recited in claim 21, wherein the quality of service information includes one of an upload bandwidth, a download bandwidth, a network data packet latency, a network data packet drop rate, and a network jitter value.

23. The method as recited in claim 1, wherein the device connects to a network service over the Internet.

24. The method as recited in claim 23, wherein connecting includes a network settings stage for configuring one of a network protocol for the Internet and an Internet Protocol address.

25. The method as recited in claim 24, wherein a dynamic host configuration protocol (DHCP) technique is attempted to complete the network settings stage and if the DHCP technique fails, then a point-to-point protocol over Ethernet (PPPoE) technique is automatically attempted to complete the network settings stage.

26. The method as recited in claim 1, wherein the connecting includes testing whether a communicative coupling exists between the device and the network;
displaying a real-time status of the testing, wherein if the communicative coupling exists then displaying a first success indicator and if the communicative coupling does not exist then displaying both a first failure indicator and troubleshooting instructions for establishing the communicative coupling;
attempting a network settings detection, wherein if the network settings are successfully detected then displaying a second success indicator and if the communicative coupling does not exist then displaying both a second failure indicator and troubleshooting instructions for detecting the network settings;
attempting a domain name system name resolution, wherein if a domain name is successfully resolved then displaying a third success indicator and if the domain name is not resolved then displaying both a third failure indicator and troubleshooting instructions for resolving the domain name; and
attempting communication with a network service available on the network,
wherein if a communication with the network service is successful then displaying a fourth success indicator and if the communication with the network service is not successful then displaying both a fourth failure indicator and troubleshooting instructions for communicating with the network service.

27. An engine for connecting a device to a network, comprising:
a communicative coupling engine to verify a communicative coupling between a device and a network;
a network settings engine to configure network settings, wherein the network settings include a network address;
a name resolution engine to associate a computing domain name with the network address; and
a service connection engine to communicate with a network service.

28. The engine as recited in claim 27, further comprising a quality of service module to test and record quality of service parameters in a network.

29. The engine as recited in claim 27, further comprising a help and troubleshooting engine to instructions in response to a connection failure.

30. The engine as recited in claim 27, further comprising an error logging engine to record errors during one or more connection attempts.

31. The engine as recited in claim 30, wherein the error logging engine persists a failure record and related extended error information of a failed connection stage for uploading to a service in response to a subsequent successful connection to a network.

32. The engine as recited in claim 31, wherein the failure record and related extended error information are uploaded for statistical treatment of multiple connection failures.

33. The engine as recited in claim 31,wherein the failure record and related extended error information arc uploaded for a Bayes network to refine a connection stage between the device and the network.

34. The engine as recited in claim 27, further comprising a user-interface engine to generate a user interface for displaying a status of the connecting the device to the network.

35. The engine as recited in claim 34, wherein the user-interface engine generates a user interface to display one of help and troubleshooting instructions.

36. The engine as recited in claim 34, wherein the user-interface engine generates a user interface to display quality of service information from a quality of service engine.

37. The engine as recited in claim 34, wherein the user-interface engine generates a user interface to display error information from an error logging engine.

38. The engine as recited in claim 27, further comprising a mode selector to switch between automatically connecting the device and the network and manual connecting the device and the network, wherein manual connecting includes manual entry of at least one network setting.

39. One or more computer readable media containing instructions that are executable by a computer to perform connection stages, comprising:
verifying a communicative coupling between a device and a network;
if the communicative coupling is verified, then obtaining an IP address using the communicative coupling, wherein obtaining an Internet Protocol (IP) address using dynamic host configuration protocol (DHCP) is attempted and if an IP address is not obtained using DHCP then obtaining an IP address using point-to-point protocol over Ethernet (PPPoE) is attempted;
if an IP address is obtained, then querying a domain name system (DNS) to resolve a domain name; and
if the domain name is resolved, then attempting communication with an online service using the IP address or the domain name.

40. The one or more computer readable media as recited in claim 39, further comprising instructions to test quality of service parameters between the device and the online service.

41. The one or more computer readable media as recited in claim 40, further comprising instructions to indicate in real-time one or more statuses of a connecting process between the device and the network, including a status for each of the verifying a communicative coupling, the obtaining an IP address, the querying a DNS, the attempting communication with an online service, and the testing quality of service parameters.

42. The one or more computer readable media as recited in claim 41, further comprising instructions to display troubleshooting instructions associated with a part of the method whenever the part of the method is not automatically completed.

43. The one or more computer readable media as recited in claim 39, further comprising instructions to store a failure record and related extended error information with respect to failures in the connection stages of verifying a communicative coupling, obtaining an IP address, querying a domain name system, and attempting communication with an online service.

44. The one or more computer readable media as recited in claim 43, further comprising instructions to upload the failure record and related extended error information in response to a subsequent successful connection to a network.

45. The one or more computer readable media as recited in claim 44, wherein the failure record and related extended error information is used in a Bayes network to improve at least one of the connection stages.

46. An automated method performed by a network connection-and-troubleshooting engine, comprising:
dividing a task of connecting a device to a network or a network service into stages;
selecting one of the stages;
attempting a technique for completing the selected stage;
displaying real-time status reports of the attempting and of a success or a failurc of the technique;
if the technique is successful, then selecting a subsequent stage and attempting a technique to complete the subsequent stage;
if the technique is not successful, then if more techniques are available then selecting and attempting another technique for the stage; and
displaying troubleshooting instructions if the technique is not successful and no more techniques are available.

47. The automated method as recited in claim 46, wherein the device connects to a network service over the Internet.

48. The automated method as recited in claim 46, wherein connecting includes a communicative coupling stage between the device and the network.

49. The automated method as recited in claim 46, wherein connecting includes a network settings stage for configuring one of a network protocol and a network address.

50. The automated method as recited in claim 49, wherein the network settings stage exists as an Internet Protocol (IP) settings stage and the network address exists as an IP address.

51. The automated method as recited in claim 50, wherein one or more techniques are attempted for completing the IP settings stage including one of a dynamic host configuration protocol (DHCP) technique, a point-to-point protocol over Ethernet (PPPoE) technique, and a bootstrap protocol (BOOTP) technique.

52. The automated method as recited in claim 49, wherein connecting includes a name resolution stage for associating the network address to a network domain name.

53. The automated method as recited in claim 52, wherein the name resolution stage exists as a domain name system (DNS) name resolution stage.

54. The automated method as recited in claim 46, wherein connecting includes a service connection stage for confirming communication with the network service.

55. The automated method as recited in claim 46, wherein the connecting proceeds between each of the multiple stages automatically.

56. The automated method as recited in claim 46, wherein the real-time status includes a message describing one of the multiple stages.

57. The automated method as recited in claim 56, wherein the message describes progress of a technique used to complete one of the multiple stages.

58. The automated method as recited in claim 46, wherein the real-time status includes a visual indicator of progress of one of the multiple stages.

59. The automated method as recited in claim 46, wherein the real-time status includes a visual indicator of success or failure of one of the multiple stages.

60. The automated method as recited in claim 46, wherein the troubleshooting help includes instructions for completing one of the multiple stages.

61. The automated method as recited in claim 46, wherein the troubleshooting help includes instructions for completing a technique used to complete one of the multiple stages.

62. The automated method as recited in claim 46, wherein the troubleshooting help includes a serial number of the device.

63. The automated method as recited in claim 46, wherein the troubleshooting help includes an error log compiled during the connecting.

64. The automated method as recited in claim 46, wherein the troubleshooting help includes a stage during the connecting at which a failure occurred.

65. The automated method as recited in claim 46, wherein the connecting includes a quality of service testing stage.

66. The automated method as recited in claim 65, wherein the troubleshooting includes quality of service information.

67. The automated method as recited in claim 66, wherein the quality of service information includes one of an upload bandwidth, a download bandwidth, a network data packet latency, a network data packet drop rate, and a network jitter value.

68. The automated method as recited in claim 46, wherein for a given stage, if a technique used to complete the stage fails, then a subsequent technique is automatically attempted to complete the stage.

69. The automated method as recited in claim 68, wherein connecting includes a network settings stage for configuring one of a network protocol for the Internet and an Internet Protocol address.

70. The automated method as recited in claim 69, wherein a dynamic host configuration protocol (DHCP) technique is attempted to complete the network settings stage and if the DHCP technique fails, then a point-to-point protocol over Ethernet (PPPoE) technique is automatically attempted to complete the network settings stage.

71. In a computer network connection and troubleshooting system having a graphical user interface including a display and a user interface selection device, a method of providing and selecting from a menu on the display comprising the steps of:
retrieving a set of menu entries for the menu including a menu having links for selecting between automatically connecting a device to a network and manually connecting the device to the network, wherein the manual connecting includes manual input of at least one network setting;
displaying the menu on the display comprising the set of edit menu entries;
receiving a menu entry selection signal indicative of the user interface selection device pointing at one of the links on the menu entry on the display, and, in response to the selection signal, selecting either automatic or manual connection of the device to the network.

72. The method of providing and selecting from a menu as recited in claim 71, further comprising a menu to accept the manual input of the network settings.

73. The method of providing and selecting from a menu as recited in claim 72, further comprising a menu to display a status of the connecting the device to the network.

74. The method of providing a selecting from a menu as recited in claim 71, further comprising a menu to display troubleshooting instructions in response to a failure to connect the device to the network.
